# EUROPÄISCHE PATENTANMELDUNG

(11) **EP 1 998 042 A1**
(43) Veröffentlichungstag der Anmeldung: **03.12.2008**
(21) Anmeldenummer: 07109236.5
(22) Anmeldetag: 30.05.2007
(51) Int. Cl.: F03D 7/02, F03D 11/00

(54) **Rotoreinheit und deren Verwendung**

(71) Anmelder: ICEC Holding AG, 6315 Morgarten (CH)
(72) Erfinder: Arbanas, Viktor, 5400, Baden (CH); Grob, Gustav R., 1227, Carouge (CH)
(74) Vertreter: OK pat AG

(57) **Zusammenfassung**

Rotoreinheit (20), beispielsweise zur Verwendung in Windkraftanlagen (10), mit motorisch verstellbaren Rotorblätter (22), die an einer Rotornabe (24) gelagert und durch eine Verstellvorrichtung (26, 28, 30) verstellbar sind. Die Verstellvorrichtung (26, 28, 30) umfasst einen Stellmotor (30) und einen Schneckenantrieb (26, 28). Die Schnecke (28) ist an einer Motorenwelle (31) des Stellmotors angeordnet. Ein Segment (26) eines Schneckenrades ist an jedem Rotorblatt (22) an dessen Stellachse (31) angeordnet. Die Segmente (26) der Schneckenräder kämmen mit der Schnecke (28). Wird die Schnecke durch den Stellmotor (30) rotiert, so werden die Rotorblätter (22) verstellt.

## Beschreibung

Die Erfindung betrifft eine Rotoreinheit nach dem Oberbegriff des Anspruchs 1 und eine Verwendung dieser Rotoreinheit nach dem Anspruch 10.

Rotoreinheiten dieser Art werden beispielsweise in Windkraftwerken eingesetzt. Dort werden sie von anströmenden Winden angetrieben, wobei die mindestens annähernd geradlinige Geschwindigkeit der Winde umgesetzt wird in die drehende Geschwindigkeit eines Rotors. Der Rotor selbst treibt einen Generator, und dieser letztere liefert elektrische Energie. Solcherart erzeugte elektrische Energie wird üblicherweise als erneuerbare Energie bezeichnet wird und bringt kaum Kollateralschäden wie Abgase oder andere unerwünschte Abfallstoffe hervor.

Zur Erreichung der bestmöglichen Effizienz werden Rotoreinheiten mit Rotorblättern ausgestattet, deren Anstellwinkel in Abhängigkeit von der Windgeschwindigkeit verstellbar sind, so dass sich optimale Geschwindigkeitsdreiecke ergeben. Ausserdem ist es vorteilhaft, wenn die Rotorblätter in eine so genannte Fahnenstellung gebracht werden können, in der sie dem Wind nur eine minimale Angriffsfläche bieten, dies insbesondere dann, wenn Sturmwinde mit hohen Geschwindigkeiten herrschen oder Defekte eintreten.

Rotoreinheiten mit solcherart verstellbaren Rotorblättern sind bekannt. Die Rotorblätter dieser Rotoreinheiten weisen verstellbare Stellachsen auf, wobei jede Stellachse durch einen separaten Stellmotor verstellbar ist. Solche Anordnungen sind aufwändig und unvorteilhaft, weil mehrere, meist drei separate Motoren eingebaut und regelbar sein müssen.

Aufgabe der Erfindung ist es daher,
- eine verbesserte Rotoreinheit der eingangs genannten Art zu schaffen, der einfach im Aufbau ist und schnell und unkompliziert geregelt werden kann; und
- eine Verwendung einer solchen Rotoreinheit vorzuschlagen.

Die Lösung dieser Aufgabe erfolgt erfindungsgemäss
- für die Rotoreinheit durch die Merkmale des kennzeichnenden Teils des unabhängigen Anspruchs 1; und
- für die Verwendung der Rotoreinheit durch die Merkmale des Anspruchs 10.

Vorteilhafte Einzelheiten und Weiterbildungen der erfindungsgemässen Rotoreinheit sind durch die vom Anspruch 1 abhängigen Ansprüche definiert.

Die neue Rotoreinheit ist so beschaffen, dass sie eine Verstellvorichtung zum Verstellen der Rotorblätter mit einem einzigen Antriebsaggregat bzw. Stellmotor aufweist, wobei als Stellmotor üblicherweise ein Elektromotor dient. Dieser Stellmotor weist einen Motorenstator und einen Motorenrotor auf. Der Motorenstator ist mit der Rotornabe verbunden und synchron mit dieser, ggfs. auch schnell, drehbar. Der Motorenrotor weist eine Motorenwelle auf, die relativ zur Rotornabe drehbar oder genauer gesagt schwenkbar ist, wobei diese Drehung bzw. Schwenkung der Motorenwelle bei Änderung der Anströmverhältnisse des Fluids im Allgemeinen langsam und um kleine Stellwinkel vor sich geht. Im Weiteren ist ein vorzugsweise selbsthemmender Schneckenantrieb vorgesehen. Dieser Schneckenantrieb umfasst eine Schnecke, die an der Motorenwelle des Motorenrotors angeordnet und durch diese antreibbar ist. Ausserdem umfasst der Schneckenantrieb pro Rotorblatt ein Schneckenrad oder eine Segment eines Schneckenrades, und alle Schneckenräder bzw. Segmente stehen mit der Schnecke im Eingriff. Jedes der Segmente bzw. Schneckenräder ist mit der Stellachse des zugehörigen Rotorblattes gekoppelt. Die Stellachsen der Rotorblätter können auf diese Weise mittels des Elektromotors gedreht bzw. genauer gesagt geschwenkt, wenn sich die Anströmverhältnisse ändern.

Wegen des Schneckenantriebs sind in einer einfachen und daher bevorzugten Anordnung die Stellachsen der Rotorblätter so angeordnet, dass sie Tangenten an einen fiktiven Zylinder bilden, dessen Achse koaxial zur Motorenwelle ist.

Vorzugsweise sind die Stellachsen der Rotorblätter gegenüber einer zur Rotorenachse senkrechten Ebene in Strömungsrichtung des Fluids um einen kleinen Neigungswinkel geneigt.

Bei einem bevorzugten Ausführungsbeispiel der erfindungsgemässen Rotoreinheit ist der Stellmotor in Richtung der Motorenwelle zwischen einer Betriebsstellung, die er bei den im Allgemeinen bzw. am häufigsten vorkommenden Umgebungsverhältnissen einnimmt, und einer Sonderstellung verschiebbar. In der Betriebsstellung kann der Stellmotor die Rotorblätter, wie weiter oben beschrieben, verstellen. Bringt man den Stellmotor in seine Sonderstellung, so gelangen die Rotorblätter ihre so genannte Fahnenstellung, in der sie dann nicht mehr durch den Stellmotor verschwenkt werden können, und in der sie dem anströmenden Fluid nur eine minimale Angriffsfläche bieten. In dieser Sonderstellung sind die Schneckenräder blockiert.

In seiner Betriebsstellung dient der Stellmotor, wie beschrieben, zum Verschwenken der Stellachsen der Rotorblätter, wobei sich dieses Verschwenken üblicherweise um geringe Winkel und mit geringer Geschwindigkeit abspielt. Die Verschwenkung der Rotorblätter in die Fahnenstellung in Folge der Verschiebung des Stellmotors in seine Sonderstellung geht dagegen beim vorliegenden Ausführungsbeispiel bedeutend rascher vor sich als die Verschwenkung der Rotorblätter durch den Stellmotor, wenn sich dieser in seiner Betriebsstellung befindet.

Im Weiteren ist eine Vorspannvorrichtung vorgesehen, die als Spannelement ein Federelement, beispielsweise eine Spiralfeder, aufweist. Diese Vorspannvorrichtung bzw. deren Federelement ist gespannt, wenn sich der Stellmotor in seiner Betriebsstellung befindet, wobei die Vorspannanordnung den Stellmotor auf seine Sonderstellung zu vorspannt. Der Stellmotor wird mittels einer, beispielsweise klinkenartigen, Arretieranordnung in seiner Betriebsstellung gehalten.

Die Arretieranordnung ist steuerbar und kann aus einer Sperrlage in eine Freigabelage und wieder zurück in die Sperrlage gebracht werden. In ihrer Sperrlage sichert die Arretieranordnung den Stellmotor in dessen Betriebsstellung. In ihrer Freigabelage gibt die Arretieranordnung den Stellmotor frei, so dass dieser durch die Vorspannvorrichtung in seine Sonderstellung verschoben wird, wobei sich die Vorspannanordnung während dieser Verschiebung entspannt.

Um den Stellmotor in seine Betriebsstellung zurückzubringen, insbesondere, wenn die Umgebungsverhältnisse so sind, dass es nicht mehr erforderlich ist, die Rotorblätter in ihrer Fahnenlage zu halten, sind entsprechende Mittel vorgesehen. Während des Zurückbringens des Stellmotors in seine Betriebsstellung wird die Vorspannvorrichtung nach und nach wieder gespannt, und wenn der Stellmotor seine Betriebsstellung erreicht hat, wird die Arretieranordnung aus ihrer Freigabelage in ihre die Sperrlage zurück gebracht.

Der soeben beschriebene Vorgang spielt sich wie folgt ab: Befindet sich der Stellmotor in seiner Sonderstellung, so stehen die Schneckenräder an einem Anschlag an, derart, dass sie in einer Richtung fest sitzen. Wird nun die Schnecke weiter gedreht, so erreicht sie eine Stellung, in der sie nicht mehr in Eingriff mit den am Anschlag anstehenden Schneckenrädern steht. So können der Elektromotor wieder in seine Betriebsstellung und die Arretieranordnung in ihre Sperrlage gelangen, wobei die Vorspannvorrichtung wieder gespannt wird.

Weitere Eigenschaften und Vorteile der Erfindung werden im Folgenden an Hand eines Ausführungsbeispieles und mit Bezug auf die Zeichnung beschrieben. Es zeigen:
- **Fig. 1**: ein Ausführungsbeispiel einer Windkraftanlage mit einer Rotoreinheit nach der Erfindung, in stark vereinfachter, schematisierter Darstellung, von der Seite;
- **Fig. 2**: die Rotorblätter mit ihren Stellachsen, ausschnittweise, und den Schneckenantrieb, in stark vereinfachter, schematisierter Darstellung, gesehen in Richtung der Motorenachse, ; und
- **Fig. 3**: die rotierbaren Bestandteile der in Fig. 1 gezeigten Rotoreinheit, in stark vereinfachter, schematisierter Darstellung, von der Seite; und
- **Fig. 4**: die Rotoreinheit nach der Erfindung, mit einem Rotorblatt, das relativ zu einer Normalebene zur Motorenachse geneigt ist, in stark vereinfachter, schematisierter Darstellung, von der Seite.

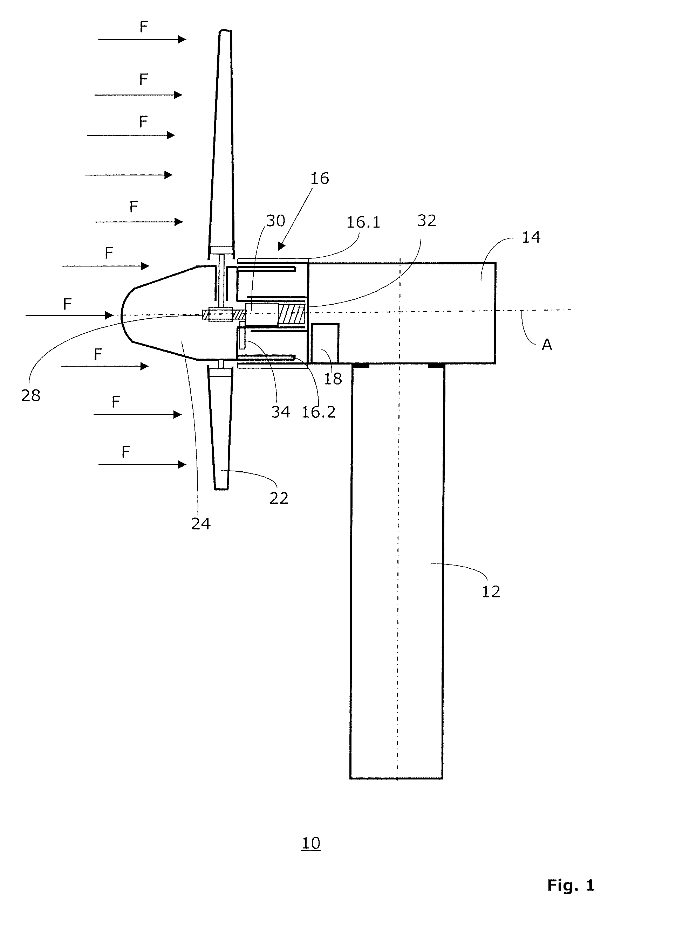

Die in Fig. 1 gezeigte Windkraftanlage 10 wird von einem Fluid, nämlich Luft, angeströmt, wobei die Anströmrichtung F durch parallele Pfeile angegeben ist.

Die Windkraftanlage 10 weist einen Turm 12, eine im obersten Bereich am Turm 12 befestigte Gondel 14, einen Generator 16 und eine Steuereinheit 18 und eine Rotoreinheit 20 auf. Der Generator 16 umfasst einen Stator 16.1, der mit der Gondel 14 verbunden ist, sowie einen Rotor 16.2, der mit der Rotoreinheit 20 nach der Erfindung verbunden ist.

Die Rotoreinheit 20 besitzt eine Hauptachse A, die auch die Rotationsachse des Rotors 16.2 des Generators 16 bildet. Die Rotoreinheit 20 umfasst ausserdem mehrere, üblicherweise drei, Rotorblätter 22, von denen in Fig. 1 zwei Rotorblätter 22 sichtbar sind, sowie eine Rotornabe 24. An der Rotornabe 24 sind die Rotorblätter 22 so angeordnet, dass sie um Stellachsen 23 drehbar bzw. aus einer Mittelstellung in entgegengesetzten Schwenkrichtungen schwenkbar sind. Je nach den Strömungsverhältnissen am vorgesehenen Standort der Windkraftanlage können die Verschwenkungswinkel, um welche die Rotorblätter verschwenkbar sein müssen, unterschiedlich sein. Als Beispiel sei ein häufig als günstig betrachteter Verschwenkungswinkel von je etwa 45° in beiden Richtungen, also insgesamt etwa 90°, genannt. Mit der Propellernabe 24 ist ferner der Rotor 16.2 des Generators 16 verbunden.

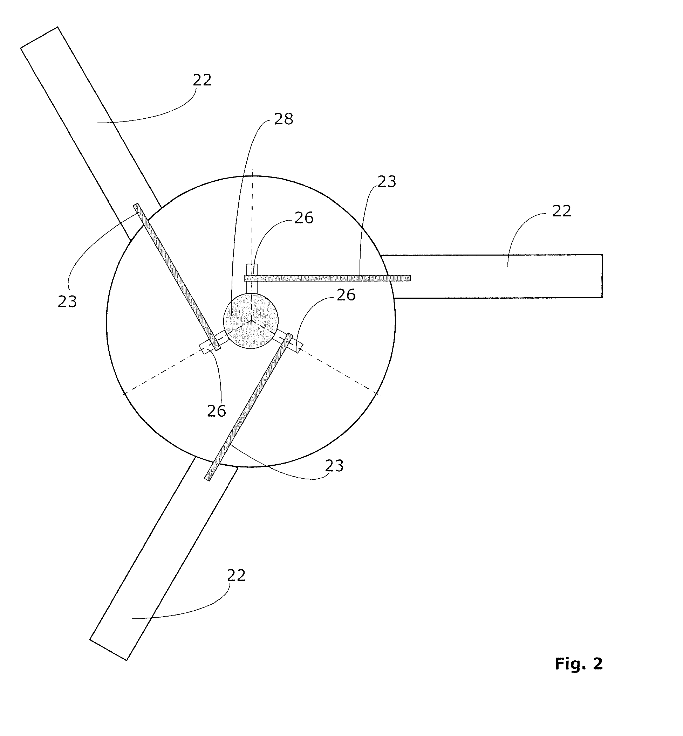

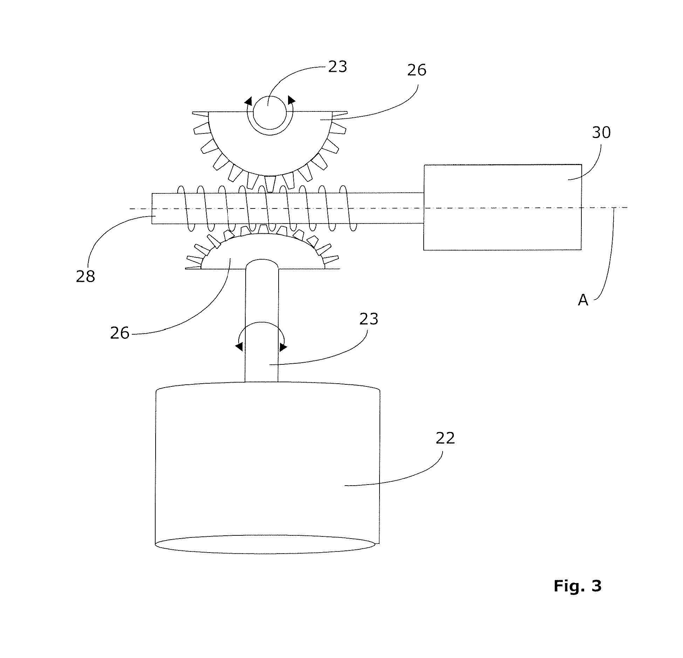

Fig. 2 und Fig. 3 zeigen, dass in der Nähe der Hauptachse A befindliche und somit innere Enden der Stellachsen 23 Schneckenräder bzw. Segmente 26 von Schneckenrädern aufweisen. Diese Segmente 26 erstrecken sich über einen Winkel, der von der maximal erforderlichen Schwenkbewegung der Rotorblätter 22 abhängig ist. Die drei Segmente 26 der Schneckenräder 22 kämmen mit einer gemeinsamen Schnecke 28. Die Segmente 26 der Schneckenräder 22 und die Schnecke 28 ergänzen sich zu einem Schneckenantrieb, der selbsthemmend ausgebildet ist.

Gemäss Fig. 2 nehmen die Stellachsen 23 wegen des Schneckenantriebes eine Lage ein, in der sie nicht radial von der Hauptachse A aus gehen, sondern Tangenten an einen fiktiven Zylinder bilden, dessen Zylinderachse mit der Hauptachse A zusammenfällt und dessen Radius im Wesentlichen dem Radius der Schnecke 28 entspricht. Durch diese spezifische Konfiguration entsteht ein Kompensations-Biegemoment, das in entgegengesetztem Sinn zu einem in jedem Falle vorhandenen Belastungs-Biegemoment wirkt. Das Belastungs-Biegemoment ist die Folge der durch das anströmende Fluid in Umfangsrichtung wirkenden Kraft, während das Kompensations-Biegemoment aus der Fliehkraft, multipliziert mit dem als Hebelarm wirkenden Radius des Segmentes 26 des Schneckenrades, entsteht. Durch das Kompensations-Biegemoment kann eine Entlastung von Lagern der Rotorblätter 22 realisiert werden.

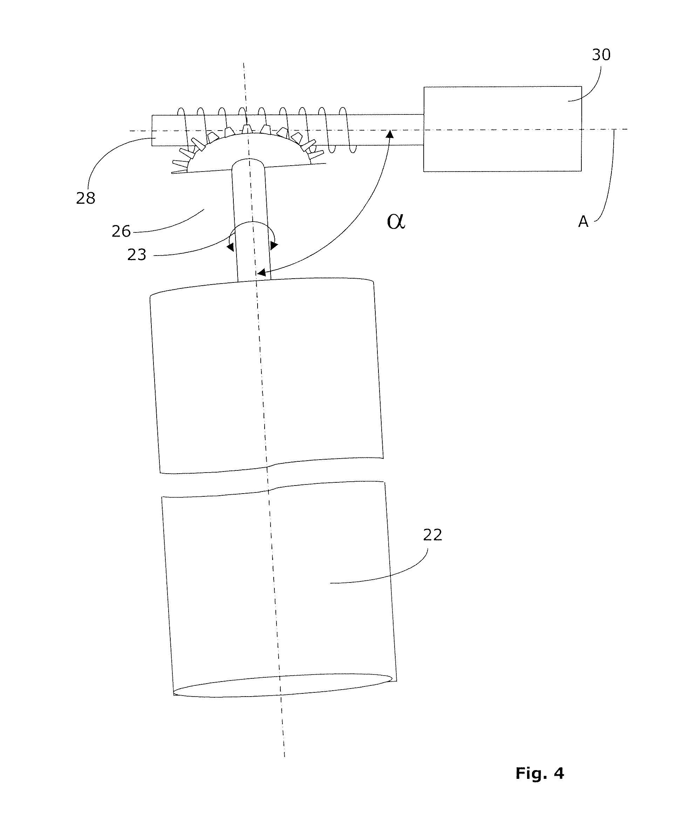

Fig. 4 zeigt, dass die Rotorblätter 22 nicht in einer zur Hauptachse A normalen Ebene liegen, sondern gegenüber einer solchen normalen Ebene in Anströmrichtung F des Fluids um einen geringen Neigungswinkel α geneigt sind und somit auf einem Konus liegen, dessen Rotationsachse die Hauptachse A ist, und der sich zur Gondel 14 hin öffnet. Dadurch entsteht ebenfalls ein spezifisches Kompensations-Biegemoment, das einem stets vorhandenen Belastungs-Biegemoment entgegenwirkt und so lager-entlastend wirkt. Das Belastungs-Biegemoment ist das Ergebnis der Biegung der Rotorblätter 22 in Folge der Wirkung des Fluids in Anströmrichtung F. Das Kompensations-Biegemoment ist abhängig einerseits von der Fliehkraft bzw. der Masse, der radialen Lage und der Drehzahl der rotierenden Teile und anderseits vom Hebelarm, der als Folge des Neigungswinkels der Rotorblätter 22 gebildet ist.

Wie Fig. 1 und Fig. 2 zeigen, sitzt die Schnecke 28 auf einer Motorenwelle 31, die mit einem Motorenrotor eines Stellmotors 30 verbunden ist, und sie kann vom Stellmotor 30 angetrieben werden, um die Segmente 26 der Schneckenräder zu rotieren und damit die Stellachsen 23 und dadurch auch die Rotorblätter 22 zu verschwenken. Die Segmente 26 der Schneckenräder, die Schnecke 28 und der Stellmotor bilden im Wesentlichen die Verstellvorrichtung für die Rotorblätter 22.

Der Stellmotor 30, üblicherweise ein Elektromotor, besitzt die Motorenwelle 31, die koaxial zur Hauptachse A verläuft. Der Stellmotor 30 weist den erwähnten, mit der Schnecke 28 gekoppelten Motorenrotor und einen Motorenstator auf. Der Motorenstator ist mit der Rotornabe 24 gekoppelt und synchron mit der letzteren drehbar.

Fig. 1 zeigt den Stellmotor 30 in seiner Betriebsstellung. Der Stellmotor 30 ist so gelagert, dass er längs der Hauptachse A, in Fig. 1 nach links, aus seiner Betriebsstellung in eine nicht dargestellte Sonderstellung verschiebbar ist. Hierzu ist eine Vorspannvorrichtung 32, im vorliegenden Ausführungsbeispiel im Wesentlichen eine Spiralfeder, vorgesehen, die das Bestreben hat, den Stellmotor 30 in Richtung zur Propellernabe 24, in Fig. 1 somit nach links, zu schieben.

Eine schieber- oder klinkenartige Arretieranordnung 34 ist vorgesehen, um zu verhindern, dass der Stellmotor 30 unter der Wirkung der Vorspannvorrichtung aus seiner Betriebsstellung in seine Sonderstellung gelangt. Die Arretieranordnung 34 sichert aber den Stellmotor 30 nur dann in dessen Betriebsstellung, wenn sie selbst ihre in Fig. 1 gezeigte Sperrlage einnimmt. Wird in Sonderfällen, beispielsweise bei hohen Anströmgeschwindigkeiten, aussergewöhnlichen Anströmrichtungen oder bei Abschaltung der Windkraftanlage 10 die Arretieranordnung 34 aus ihrer Sperrlage in eine Freigabelage gebracht, das heisst in Fig. 1 nach unten bewegt, so gibt sie den Stellmotor 30 für eine Verschiebung frei, und der Stellmotor 30 bewegt sich unter der Wirkung der sich dabei entspannenden Vorspannvorrichtung 32 aus der in Fig. 1 gezeigten Betriebsstellung nach links in seine Sonderstellung, wobei die Rotorblätter 22 in ihre Fahnenstellung gelangen und blockiert an Anschlägen anliegen.

Um den Stellmotor 30 in axialer Richtung in seine Betriebsstellung zurück zu bringen, wird er betätigt, wodurch die Schnecke 28 sich aus den am Anschlag anliegenden bzw. blockierten Segmenten 26 der Schneckenräder hinausdreht, so dass eine axiale Bewegung des Stellmotors 30, in den Fig. 1 und 2 nach rechts, erfolgt, wobei während dieser Bewegung die Vorspannvorrichtung 32 wieder gespannt und die Arretieranordnung 34 letztlich wieder in die Sperrlage gebracht werden.

Sowohl die Verstellung der Rotorblätter 22 als auch die Verschiebung des Stellmotors 30 aus seiner Betriebsstellung in seine Sonderstellung und die Rückführung des Stellmotors 30 in die Betriebsstellung können selbsttätig bzw. durch die Steuereinheit 18 kontrolliert erfolgen.

Die Rotoreinheit 20 nach der Erfindung kann in verschiedensten Anlagen Verwendung finden, welche die Energie anströmender fliessfähiger Medien in Rotationsbewegungen umsetzen. Insbesondere eignet sich die neue Rotoreinheit als Bestandteil von Windkraftanlagen.

### Bezugszeichen

- 10: Windkraftanlage
- 12: Turm
- 14: Gondel
- 16: Generator
- 16.1: Stator von 16
- 16.2: Rotor von 16
- 18: Steuereinheit
- 20: Rotoreinheit
- 22: Rotorblatt
- 23: Stellachse von 22
- 24: Rotornabe
- 26: Segment von Schneckenrad
- 28: Schnecke
- 30: Stellmotor
- 31: Motorenwelle
- 32: Vorspannvorrichtung
- 34: Arretieranordnung

- A: Hauptachse (Rotationsachse)
- F: Anströmrichtung

- α: Neigungswinkel von 22 gegenüber Normalebene zu A

## Patentansprüche

1. Rotoreinheit (20) zum Umwandeln einer Geschwindigkeit eines anströmenden Fluids in eine Rotationsgeschwindigkeit der Rotoreinheit (20), die mehrere, in einer Betriebsstellung durch eine Verstellvorrichtung (26, 28, 30) um Stellachsen (23) motorisch verstellbare Rotorblätter (22) aufweist, die an einer Rotornabe (24) mit einer Hauptachse (A) gelagert sind,
**dadurch gekennzeichnet,**
**dass** die Verstellvorrichtung (26, 28, 30) umfasst
- einen als Stellmotor (30) wirkenden Elektromotor, der einen Motorenstator und einen Motorenrotor aufweist, wobei
o der Motorenstator mit der Rotornabe (24) verbunden und synchron mit dieser drehbar ist, und
o der Motorenrotor eine Motorenwelle (31) aufweist, die relativ zur Rotornabe (24) drehbar ist, sowie
- einen Schneckenantrieb (26, 28)
o mit einer Schnecke (28), die an der Motorenwelle (31) des Motorenrotors angeordnet und durch diese antreibbar ist, und
o mit einem Segment (26) eines Schneckenrades für jedes der Rotorblätter (22), wobei
■ jedes Segment (26) mit der Stellachse (23) eines der Rotorblätter (22) gekoppelt ist, und
■ die Segmente (26) der Schneckenräder mit der Schnecke (28) kämmen.

2. Rotoreinheit (20) nach Anspruch **1,**
**dadurch gekennzeichnet,**
**dass** die Stellachsen (23) der Rotorblätter (22) Tangenten an einem fiktiven Zylinder sind, dessen Achse die Hauptachse (A) und dessen Radius vorzugsweise der Radius der Schnecke (28) ist.

3. Rotoreinheit (20) nach Anspruch **1,**
**dadurch gekennzeichnet,**
**dass** die Stellachse (23) jedes der Rotorblätter (22) gegenüber einer zur Hauptachse (A) senkrechten Ebene in Anströmrichtung (F) des Fluids um einen Neigungswinkel (α) geneigt ist.

4. Rotoreinheit (20) nach Anspruch **1,**
**dadurch gekennzeichnet,**
**dass** der Stellmotor (30) in Richtung der Motorenwelle (31) zwischen einer Betriebsstellung, in der die Rotorflügel (22) verstellbar sind, und einer Sonderstellung verschiebbar ist.

5. Rotoreinheit (20) nach Anspruch **4,**
**dadurch gekennzeichnet,**
**dass** in der Sonderstellung des Stellmotors (30) die Rotorblätter (7) in einer Fahenstellung sind, in der sie und die, an einem Anschlag anliegenden, Segmente (26) der Schneckenräder blockiert sind.

6. Rotoreinheit (20) nach Anspruch **4,**
**dadurch gekennzeichnet,**
- **dass** eine federnde Vorspannvorrichtung (32) vorgesehen ist, die gespannt ist, wenn der Stellmotor (30) in seiner Betriebsstellung ist, und die den Stellmotor (30) auf seine Sonderstellung zu vorspannt, und
- **dass** eine Arretieranordnung (34) vorgesehen ist, die zwischen einer Sperrlage und einer Freigabelage verstellbar ist, welche Arretieranordnung (34) den Stellmotor (30)
o in ihrer Sperrlage in seiner Betriebsstellung sichert und
o in ihrer Freigabelage zur Verschiebung in seine Sonderstellung durch die Vorspannanordnung (34) freigibt.

7. Rotoreinheit (20) nach Anspruch 6,
**dadurch gekennzeichnet,**
**dass** die Vorspannvorrichtung (32) ein Federelement, vorzugsweise eine mechanische und insbesondere eine Spiralfeder, umfasst.

8. Rotoreinheit (20) nach Anspruch 6,
**dadurch gekennzeichnet**,
Mittel vorgesehen sind, um den Stellmotor (30) aus der Sonderstellung in die Betriebsstellung zurück zu führen, wobei
- die Vorspannvorrichtung (32) gespannt und
- die Arretieranordnung (34) aus der Freigabelage in die Sperrlage gebracht wird.

9. Rotoreinheit (20) nach Anspruch 8,
**dadurch gekennzeichnet,**
**dass** eine Steuereinheit (18) angeordnet ist, um das Verstellen der Rotorblätter (22) und/oder die Verschiebungen des Stellmotors (30) zu kontrollieren.

10. Verwendung einer Rotoreinheit (20) mit mehreren Rotorblättern, die durch eine Stellvorrichtung (26, 28, 30), umfassend
- ein Segment (26) eines Schneckenrad an einer Stellachse 23) jedes der Rotorblätter (22),
- eine mit allen Segmenten (26) kämmende Schnecke (28) und
- einen Stellmotor zum Antreiben der Schnecke (28) verstellbar sind, in einer Windkraftanlage (10).
